# EUROPEAN PATENT APPLICATION

(11) **EP 2 639 925 A1**
(43) Date of publication of application: **18.09.2013**
(21) Application number: 12165584.9
(22) Date of filing: 25.04.2012
(51) Int. Cl.: H02J 7/14, H02J 7/00, H02J 7/16

(54) **Regulating generators using battery charge information**

(30) Priority: 16.03.2012 US 201213422691
(71) Applicant: Bell Helicopter Textron Inc., Fort Worth, TX 76101 (US)
(72) Inventor: Sowden, Chandler, North Richland Hills, TX Texas 76180 (US)
(74) Representative: Lawrence, John

(57) **Abstract**

According to one embodiment, an electrical system (100) comprises a generator (120; 130), a battery (140), and a regulator (150). The generator (120; 130) is operable to provide electrical energy at a plurality of voltage levels. The battery (140) is in electrical communication with the generator (120; 130). The regulator (150) is operable to compare a charge level of the battery (140) to a reference charge level, determine a voltage level for the generator (120; 130) based on the comparison, and provide a signal indicative of the determination toward the generator (120; 130).

## Description

### TECHNICAL FIELD

This invention relates generally to vehicle electrical systems, and more particularly, to regulating generators using battery charge information.

### BACKGROUND

A vehicle electrical system may include a battery and a generator. To start the vehicle, the battery may provide electrical energy in order to start the engine. Once the engine is running, the engine may power the generator. The generator may produce electrical energy to charge the battery. In some vehicles, the generator voltage may be manually adjusted when the vehicle is not in operation.

### SUMMARY

According to one embodiment, an electrical system comprises a generator, a battery, and a regulator. The generator is operable to provide electrical energy at a plurality of voltage levels. The battery is in electrical communication with the generator. The regulator is operable to compare a charge level of the battery to a reference charge level, determine a voltage level for the generator based on the comparison, and provide a signal indicative of the determination toward the generator.

Particular embodiments of the present disclosure may provide one or more technical advantages. A technical advantage of one embodiment may include the capability to automatically control the voltage of electrical energy provided by the generator. A technical advantage of one embodiment may also include the capability to reduce the time necessary to charge the battery. A technical advantage of one embodiment may also include the capability to prevent the generator from producing electrical voltages outside a safe operating range of the electrical system.

Certain embodiments of the present disclosure may include some, all, or none of the above advantages. One or more other technical advantages may be readily apparent to those skilled in the art from the figures, descriptions, and claims included herein.

A first aspect of the invention provides a vehicle electrical system, preferably an aircraft electrical system, comprising:
a generator operable to provide electrical energy at a plurality of voltage levels;
a battery in electrical communication with the generator; and
a regulator operable to:
   compare a charge level of the battery to a reference charge level;
   determine a voltage level for the generator based on the comparison; and provide a signal indicative of the determination toward the generator.

In an embodiment, the aircraft electrical system may further comprise a generator control unit operable to control the voltage levels of the generator, wherein:
the regulator is operable to provide the signal to the generator control unit; and
the generator control unit is operable to set the voltage level of the generator to the determined voltage level based on the signal.

The battery may be further operable to provide, to the regulator, information identifying a battery voltage, a battery current, and the charge level.

In an embodiment, the regulator may compare the charge level of the battery to the reference charge level in response to detecting a non-zero battery current.

In an embodiment, determining the voltage level for the generator may comprise selecting a voltage level greater than a battery voltage associated with the battery if the charge level is less than the reference charge level or selecting a voltage level less than the battery voltage if the charge level is greater than the reference charge level.

In an embodiment, determining the voltage level for the generator may comprise increasing the voltage level for the generator if the charge level is less than the reference charge level or decreasing the voltage level if the charge level is greater than the reference charge level.

In an embodiment, the regulator may be operable to compare the charge level to a second reference charge level greater than the reference charge level; and
determining the voltage level for the generator may comprise increasing the voltage level for the generator if the charge level is less than the reference charge level or decreasing the voltage level if the charge level is greater than the second reference charge level.

Another aspect of the invention provides a generator regulator, comprising:
a receiving module coupled to a battery and operable to receive, from the battery, information identifying a charge level of the battery;
a determination module operable to compare the charge level to a reference charge level and determine a voltage level for a generator based on the comparison, the generator being operable to provide electrical energy at a plurality of voltage levels; and
a communication module operable to provide a signal indicative of the determination toward the generator.

In an embodiment, the communication module may comprise one or more switches, wherein the determination module is operable to open and close each of the one or more switches.

In an embodiment, the information received from the battery may further identify a battery voltage and a battery current.

In an embodiment, the determination module may compare the charge level of the battery to the reference charge level in response to detecting a non-zero battery current.

In an embodiment, the determination module may be operable to determine the voltage level for the generator by selecting a voltage level greater than a battery voltage associated with the battery if the charge level is less than the reference charge level or selecting a voltage level less than the battery voltage if the charge level is greater than the reference charge level.

In an embodiment, the determination module may be operable to determine the voltage level for the generator by increasing the voltage level for the generator if the charge level is less than the reference charge level or decreasing the voltage level if the charge level is greater than the reference charge level.

In an embodiment, the regulator may be operable to compare the charge level to a second reference charge level greater than the reference charge level; and
determining the voltage level for the generator may comprise increasing the voltage level for the generator if the charge level is less than the reference charge level or decreasing the voltage level if the charge level is greater than the second reference charge level.

Another aspect of the invention provides a method for regulating a generator, comprising:
receiving, at a regulator, from a battery, information identifying a charge level of the battery;
comparing, by the regulator, the charge level to a reference charge level;
determining, by the regulator, a voltage level for a generator based on the comparison, the generator being operable to provide electrical energy at a plurality of voltage levels; and
providing, by the regulator, a signal indicative of the determination toward the generator.

In an embodiment, the information received from the battery may further identify a battery voltage and a battery current.

In an embodiment, the charge level may be compared to the reference charge level in response to detecting a non-zero battery current.

In an embodiment, determining the voltage level for the generator may comprise selecting a voltage level greater than a battery voltage associated with the battery if the charge level is less than the reference charge level or selecting a voltage level less than the battery voltage if the charge level is greater than the reference charge level.

In an embodiment, determining the voltage level for the generator may comprise increasing the voltage level for the generator if the charge level is less than the reference charge level or decreasing the voltage level if the charge level is greater than the reference charge level.

In an embodiment, the regulator may be operable to compare the charge level to a second reference charge level greater than the reference charge level; and
determining the voltage level for the generator may comprise increasing the voltage level for the generator if the charge level is less than the reference charge level or decreasing the voltage level if the charge level is greater than the second reference charge level.

### BRIEF DESCRIPTION OF THE DRAWINGS

For a more complete understanding of the present disclosure and its advantages, reference is now made to the following description taken in conjunction with the accompanying drawings, in which:
FIGURE 1 shows an electrical system according to one example embodiment;
FIGURE 2 shows the regulator of FIGURE 1 according to one example embodiment; and
FIGURE 3 shows a method for regulating generator voltage in the aircraft electrical system of FIGURE 1 according to one example embodiment.

### DETAILED DESCRIPTION OF THE DRAWINGS

As stated above, a vehicle electrical system may include a battery and a generator. To start the vehicle, the battery may provide electrical energy in order to start the engine. Once the engine is running, the engine may power the generator. The generator may produce electrical energy to charge the battery.

The electrical system may operate at a lower voltage when the battery supplies the electrical power rather than the generator. In one example scenario, an aircraft battery supplies electrical power at approximately 24 to 25 volts, whereas an aircraft generator may electrical power at a fixed 28 volts. This variance in supply voltage does not affect most aircraft electrical devices because most devices are designed to operate over a wide range of voltages (e.g., 22 to 30 volts).

In this example scenario, starting the engine substantially reduces the charge of the battery. For example, starting an aircraft engine may deplete one-third or more of the aircraft battery's capacity. The amount of battery depletion during engine start-up may depend on the size of the battery and the power used to start the engines. For example, some aircraft may have limited battery capacity due to weight considerations and thus may deplete battery capacity more quickly. In addition, aircraft engines may require more energy to start as compared to other vehicles such as automobiles.

After the engine is running, however, the generators may provide electrical energy at a higher voltage (e.g., 28 volts). This voltage may be sufficient to begin replacing the energy lost during preflight activities and engine start-up. In this example scenario, however, the battery energy is replenished slowly because the aircraft generator provides electrical power at a fixed 28 volts. Thus, the battery cannot provide its full capability in the event of an in-flight generator failure. A generator failure at takeoff may be especially dangerous because the battery has not yet fully recharged after starting the engines.

Accordingly, teachings of certain embodiments recognize the capability to speed up charging of the battery. For example, if the generator voltage is increased during charging (e.g., to 28.5 or 29 volts), the battery may be charged more quickly. Increasing the voltage permanently, however, could damage the battery due to overcharging. Accordingly, teachings of certain embodiments recognize the ability to adjust generator voltage based on battery charge information.

Some aircraft may allow the generator voltage to be manually adjusted when the aircraft is on the ground. Relying on manual adjustment, however, can still result in damage to the battery due to overcharging. In addition, adjusting the generator voltage when the aircraft is on the ground may be based on guesses by the pilot (or other ground personnel) and not based on calculations using battery charge information, which change during flight. Battery needs may be affected by air temperature, difficult engine starting, the average length of the aircraft's missions, and other factors that may be difficult to predict before flight. Accordingly, teachings of certain embodiments recognize the capability to adjust generator voltage automatically during flight using battery charge information.

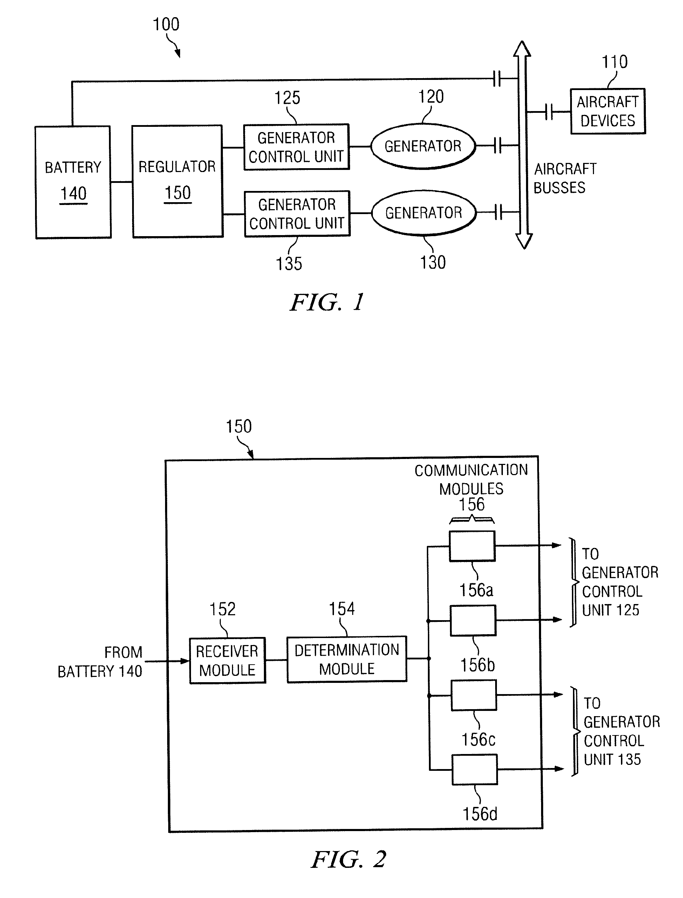

FIGURE 1 shows an electrical system 100 according to one example embodiment. System 100 includes aircraft devices 110, a generator 120 coupled to a generator control unit 125, a generator 130 coupled to a generator control unit 135, a battery 140, and a regulator 150. Embodiments may include more or fewer generator control units, generators, batteries, and/or regulators. Components of electrical system 100 may be in electrical communication directly and/or indirectly. For example, battery 140 is in electrical communication with generators 120 and 130 through the aircraft busses and through regulator 150 and generator control units 125 and 135.

Aircraft devices 110 are electrical devices powered by electrical system 100. Examples of aircraft devices 110 may include lights, radios, and antennas. Aircraft devices 110 may be powered by generators 120 and 130 when aircraft engines are running and by battery 140 when the aircraft engines are not. Aircraft devices 110 may be capable of operating over a wide range of voltages (e.g., 22 to 30 volts).

Generators 120 and 130 provide electrical energy to electrical system 100. Examples of generators 120 and 130 may include engine-driven generators, ram-air turbines, and auxiliary power units. Generators 120 and 130 may charge battery 140 by providing electrical energy greater than the electrical energy used by aircraft devices 110.

Generator control units 125 and 135 control the voltage of electrical energy provided by generators 120 and 130. In the example of FIGURE 1, generator control units 125 and 135 set the voltage for generators 120 and 130 based on signals received from regulator 150.

Battery 140 stores electrical energy from electrical system 100 and provides stored electrical energy to electrical system 100. In one example embodiment, battery 140 is a lithium ion battery.

Battery 140 may include an internal monitoring circuit for collecting information about battery 140, such as voltage (e.g., terminal voltage which may indicate the voltage produced by generators 120 and 130), current (e.g., "charge" or "discharge" current indicating the amount of current moving into/out of battery 140), and charge level information (e.g., charge percentage). Such internal monitoring circuit may measure information for individual power cells within battery 140. Battery 140 may also include a data bus for communicating information about battery 140. For example, in one embodiment, battery 140 communicates information about battery 140 using ARINC 429, a data transfer standard for aircraft avionics.

Regulator 150 determines the voltage level for generators 120 and 130. A voltage level may be represented, for example, by a voltage value (e.g., 28 volts) or a voltage change (e.g., increase voltage by 0.5 volts).

In operation, according to one embodiment, regulator 150 receives charge level information from battery 140. Regulator 150 compares the charge level with a reference charge level and determines whether to increase the voltage of the electrical energy produced by generators 120 and 130. For example, if the charge level of battery 140 is lower than the reference charge level, regulator 150 sends signals to generator control units 125 and 135 indicative of the determination. The signals may, for example, instruct generator control units 125 and 135 to increase the voltage set for generators 120 and 130. Generator control units 125 and 135 set generators 120 and 130 to provide electrical energy at the increased voltage.

In another example embodiment, regulator 150 may compare charge level information with two reference charge levels. For example, a first reference charge level may be 95%, and a second reference charge level may be 99%. If the charge level of battery 140 is lower than both reference charge levels, regulator 150 instructs generator control units 125 and 135 to increase the voltage set for generators 120 and 130. If the charge level of battery 140 is higher than both reference charge levels, regulator 150 instructs generator control units 125 and 135 to decrease the voltage set for generators 120 and 130. Regulator 150 maintains the existing voltage if the charge level of battery 140 is between the two reference charge levels.

Regulator 150 may adjust the voltage of generators 120 and 130 iteratively. For example, if the charge level of battery 140 is less than a reference charge level, regulator 150 may instruct generator control units 125 and 135 to increase the voltage set for generators 120 and 130 by 0.5 volts. If, after an iterative period (e.g., period of time), the charge level of battery 140 is still less than the reference charge level, regulator 150 may instruct generator control units 125 and 135 to increase the voltage set for generators 120 and 130 by another 0.5 volts.

In some embodiments, charge level information may include current information. Teachings of certain embodiments recognize that regulator 150 may use current information as an approximation for charge percentage and other types of charge level information. For example, in one embodiment, regulator 150 measures the current of battery 140 during engine start and then raises generator voltage until a like amount of energy has been returned to battery 140. In some embodiments, regulator 150 may use current information if charge percentage is unavailable. Charge percentage may be unavailable, for example, if battery 140 lacks internal monitoring circuitry or if such circuitry malfunctions.

As stated above, aircraft devices 110 may be capable of operating over a wide range of voltages (e.g., 22 to 30 volts). Teachings of certain embodiments recognize the capability to limit generators 120 and 130 to producing electrical power within the range of voltages allowable for aircraft devices 110. In one example embodiment, regulator 150 is limited to selecting one of a plurality of voltage levels that fall within the range of voltages allowable for aircraft devices 110. In another example embodiment, regulator 150 is capable of selecting any voltage, but then regulator 150 and/or generator control units 125 and 135 may reject the voltage selection if it is outside the range of allowable voltages. In some embodiments, generator control units 125 and 135 and/or regulator 150 are limited to a subset of voltages within the range of voltages allowable for aircraft devices 110. For example, if aircraft devices 110 can operate between 22 and 30 volts, generator control units 125 and 135 and/or regulator 150 may be limited to 27 to 29 volts.

FIGURE 2 shows regulator 150 according to one example embodiment. As shown in FIGURE 2, regulator 150 includes a receiver module 152, a determination module 154, and communication modules 156.

Receiver module 152 receives and decodes information received from battery 140. In the example of FIGURE 2, receiver module 152 is a low-speed ARINC 429 input module. The low-speed ARINC 429 input module may be configured to recognize two inputs. The first input is battery current in amps. According to this input, charge current is positive, and discharge current is negative. The least significant bit (LSB) is 1 amp. The first input is present in both half-second data frames. The second input is battery state of charge in percent. The LSB is 1 percent. The second input is present on one of the two half-second data frames. In some embodiments, receiver module 152 may be configured to receive additional inputs, such as voltage.

Determination module 154 determines the voltage for generators 120 and 130. Determination module 154 receives current and charge percentage information from battery 140 through receiver module 152 and transmits voltage settings to generators 120 and 130 through communication modules 156 and generator control units 125 and 135. In the example of FIGURE 2, determination module 154 selects the generator voltage from four voltage levels: 27.5 volts, 28 volts, 28.5 volts, and 29 volts.

Communication modules 156 send signals indicative of the voltage determination by determination module 154 toward the generator. These signals instruct generator control units 125 and 135 to set the generator voltage. In the example of FIGURE 2, communication modules 156 include two pairs of switches 156a-156b. The first pair, switches 156a and 156b, communicates with generator control unit 125, and the second pair, switches 156c and 156d, communicates with generator control unit 135.

Each switch may be open or closed. In the example of FIGURE 4, each pair of switches may communicate one of four voltages by opening or closing each switch. For example, regulator 150 may communicate a voltage of 27.5 volts by grounding both switch 156a and switch 156b. Regulator 150 may communicate a voltage of 28 volts by opening switch 156a and grounding switch 156b. Regulator 150 may communicate a voltage of 28.5 volts by grounding switch 156a and opening switch 156b. Finally, regulator 150 may communicate a voltage of 29 volts by opening both switch 156a and switch 156b.

Receiver module 152, determination module 154, and communication modules 156 may be implemented by components such as processors, communication links, memory, and logic. Regulator 150 may be operable to perform one or more operations of various embodiments. Although the embodiment shown provides one example of regulator 150 that may be used with other embodiments, such other embodiments may utilize computers other than regulator 150. Additionally, embodiments may also employ multiple regulators 150.

Processors represent devices operable to execute logic contained within a medium. Examples of processor include one or more microprocessors, one or more applications, and/or other logic. Regulator 150 may include one or multiple processors.

Communication links are operable to facilitate communication between regulator 150 and other components. In one example embodiment, regulator 150 is a printed circuit board having communication links for receiving power and communicating with generator control units 125 and 135 and battery 140.

Memory represents may store any data for use by regulator 150. Memory may comprise one or more tangible, computer-readable, and/or computer-executable storage medium. Examples of memory include computer memory (for example, Random Access Memory (RAM) or Read Only Memory (ROM)), mass storage media (for example, a hard disk), removable storage media (for example, a Compact Disk (CD) or a Digital Video Disk (DVD)), database and/or network storage (for example, a server), and/or other computer-readable medium.

In some embodiments, memory stores logic. Logic facilitates operation of regulator 150. Logic may include hardware, software, and/or other logic. Logic may be encoded in one or more tangible, non-transitory media and may perform operations when executed by a computer. Logic may include a computer program, software, computer executable instructions, and/or instructions capable of being executed by regulator 150. In particular embodiments, the operations of the embodiments may be performed by one or more computer readable media storing, embodied with, and/or encoded with a computer program and/or having a stored and/or an encoded computer program. Logic may also be embedded within any other suitable medium without departing from the scope of the invention.

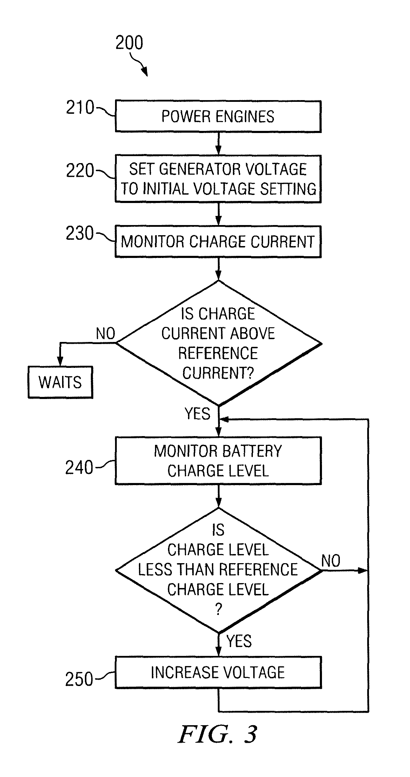

FIGURE 3 shows a method 200 for regulating generator voltage in an aircraft electrical system according to one example embodiment. At step 210, the aircraft engines are powered on using electrical energy stored in battery 140. At step 220, regulator 150 sets the generator voltage to an initial voltage setting: 28 volts. Regulator 150 monitors the charge current of battery 140 at step 230.

Regulator 150 waits until the charge current of battery 140 reaches or exceeds a reference charge current (e.g., 20 amps). At step 240, regulator 150 monitors the charge level of battery 140. If the charge level of battery 140 is less than a reference charge level (e.g., 95% charge), regulator 150 determines that generator voltage should be increased (e.g., by 0.5 volts).

In one example embodiment, regulator 150 may determine the generator voltage in an effort to regulate the charge current of battery 140. If the charge current is less than 100 amps, for example, regulator 150 may increase generator voltage by 0.5 volts. Regulator 150 may continue to increase generator voltage until one of the following occurs: (1) the charge current is greater than 100 amps; (2) the generator voltage is 29 volts; or (3) the charge level of battery 140 reaches 95 percent. If the charge current is greater than 175 amps, on the other hand, regulator 150 may decrease generator voltage by 0.5 volts. Regulator 150 may continue to decrease generator voltage until one of the following occurs the charge current is less than 175 amps or the generator voltage is 27.5 volts.

Modifications, additions, or omissions may be made to the systems and apparatuses described herein without departing from the scope of the invention. The components of the systems and apparatuses may be integrated or separated. Moreover, the operations of the systems and apparatuses may be performed by more, fewer, or other components. The methods may include more, fewer, or other steps. Additionally, steps may be performed in any suitable order.

Although several embodiments have been illustrated and described in detail, it will be recognized that substitutions and alterations are possible without departing from the spirit and scope of the present invention, as defined by the appended claims.

## Claims

1. An aircraft electrical system (100) comprising:
a generator (120; 130) operable to provide electrical energy at a plurality of voltage levels;
a battery (140) in electrical communication with the generator (120; 130); and
a regulator (150) operable to:
compare a charge level of the battery (140) to a reference charge level;
determine a voltage level for the generator (120; 130) based on the comparison; and
provide a signal indicative of the determination toward the generator (120; 130).

2. The aircraft electrical system (100) of claim 1, further comprising a generator control unit (125; 135) operable to control the voltage levels of the generator (120; 130), wherein:
the regulator (150) is operable to provide the signal to the generator control unit (125, 135); and
the generator control unit (125; 135) is operable to set the voltage level of the generator (120; 130) to the determined voltage level based on the signal.

3. The aircraft electrical system (100) of claim 1 or claim 2, wherein the battery (140) is further operable to provide, to the regulator (150), information identifying a battery voltage, a battery current, and the charge level.

4. A generator (150) regulator, comprising:
a receiving module (152) coupled to a battery (140) and operable to receive, from the battery (140), information identifying a charge level of the battery (140);
a determination module (154) operable to compare the charge level to a reference charge level and determine a voltage level for a generator (120; 130) based on the comparison, the generator (120; 130) being operable to provide electrical energy at a plurality of voltage levels; and
a communication module (156) operable to provide a signal indicative of the determination toward the generator (120; 130).

5. The generator regulator (150) of claim 4, wherein the communication module (156) comprises one or more switches (156 a-d), wherein the determination module (154) is operable to open and close each of the one or more switches (156 a-d).

6. The generator regulator (150) of claim 4 or claim 5, wherein the information received from the battery (140) further identifies a battery voltage and a battery current.

7. A method (200) for regulating a generator (120; 130), comprising:
receiving, at a regulator (150), from a battery (140), information identifying a charge level of the battery (140);
comparing, by the regulator (150), the charge level to a reference charge level;
determining, by the regulator (150), a voltage level for a generator (120; 130) based on the comparison, the generator (120; 130) being operable to provide electrical energy at a plurality of voltage levels; and
providing, by the regulator (150), a signal indicative of the determination toward the generator (120; 130).

8. The method of claim 7, wherein the information received from the battery (140) further identifies a battery voltage and a battery current.

9. The aircraft electrical system (100) of claim 3, wherein the regulator (150) compares the charge level of the battery (140) to the reference charge level in response to detecting a non-zero battery current, or
the generator regulator (150) of claim 6, wherein the determination module (154) compares the charge level of the battery (140) to the reference charge level in response to detecting a non-zero battery current, or
the method (200) of claim 8, wherein the charge level is compared to the reference charge level in response to detecting a non-zero battery current.

10. The aircraft electrical system (100) of any one of claims 1 to 3, wherein determining the voltage level for the generator (120; 130) comprises selecting a voltage level greater than a battery voltage associated with the battery (140) if the charge level is less than the reference charge level or selecting a voltage level less than the battery voltage if the charge level is greater than the reference charge level, or
the generator regulator (150) of claim 4, claim 5 or claim 6, wherein the determination module (154) is operable to determine the voltage level for the generator (120; 130) by selecting a voltage level greater than a battery voltage associated with the battery (140) if the charge level is less than the reference charge level or selecting a voltage level less than the battery voltage if the charge level is greater than the reference charge level, or
the method (200) of claim 7 or claim 8, wherein determining the voltage level for the generator (120; 130) comprises selecting a voltage level greater than a battery voltage associated with the battery (140) if the charge level is less than the reference charge level or selecting a voltage level less than the battery voltage if the charge level is greater than the reference charge level.

11. The aircraft electrical system (100) of any one of claims 1 to 3, wherein determining the voltage level for the generator (120; 130) comprises increasing the voltage level for the generator (120; 130) if the charge level is less than the reference charge level or decreasing the voltage level if the charge level is greater than the reference charge level, or
the generator regulator (150) of claim 4, claim 5 or claim 6, wherein the determination module (154) is operable to determine the voltage level for the generator (120; 130) by increasing the voltage level for the generator (120; 130) if the charge level is less than the reference charge level or decreasing the voltage level if the charge level is greater than the reference charge level, or
the method (200) of claim 7 or claim 8, wherein determining the voltage level for the generator (120; 130) comprises increasing the voltage level for the generator if the charge level is less than the reference charge level or decreasing the voltage level if the charge level is greater than the reference charge level

12. The aircraft electrical system (100) of any one of claims 1 to 3, wherein:
the regulator (150) is operable to compare the charge level to a second reference charge level greater than the reference charge level; and
determining the voltage level for the generator (120; 130) comprises increasing the voltage level for the generator (120; 130) if the charge level is less than the reference charge level or decreasing the voltage level if the charge level is greater than the second reference charge level, or
the generator regulator (150) of claim 4, claim 5 or claim 6, wherein:
the regulator (150) is operable to compare the charge level to a second reference charge level greater than the reference charge level; and
determining the voltage level for the generator (150) comprises increasing the voltage level for the generator (150) if the charge level is less than the reference charge level or decreasing the voltage level if the charge level is greater than the second reference charge level, or
the method (200) of claim 7 or claim 8, wherein:
the regulator (150) is operable to compare the charge level to a second reference charge level greater than the reference charge level; and
determining the voltage level for the generator (120; 130) comprises increasing the voltage level for the generator (120; 130) if the charge level is less than the reference charge level or decreasing the voltage level if the charge level is greater than the second reference charge level.
